(19) Europäisches Patentamt
European Patent Office
Office européen des brevets

(11) Veröffentlichungsnummer: 0 266 693 A2

(12) # EUROPÄISCHE PATENTANMELDUNG

(21) Anmeldenummer: 87115962.0

(51) Int. Cl.4: C08G 77/42 , C08G 77/60

(22) Anmeldetag: 30.10.87

(30) Priorität: 03.11.86 DE 3637402

(43) Veröffentlichungstag der Anmeldung: 11.05.88 Patentblatt 88/19

(84) Benannte Vertragsstaaten: DE FR GB NL

(71) Anmelder: BASF Aktiengesellschaft
Carl-Bosch-Strasse 38
D-6700 Ludwigshafen(DE)

(72) Erfinder: Naarmann, Herbert, Dr.
Haardtblick 15
D-6719 Wattenheim(DE)
Erfinder: Theophilou, Nicolas, Dr.
Brechlochstrasse 9
D-6700 Ludwigshafen(DE)
Erfinder: Schue, Francois, Prof.Dr.
33, Rue des Mimosas
F-67000 Strasbourg(FR)
Erfinder: Sledz, Joseph, Dr.
Le Ramassol 71
F-34660 Cournonterral(FR)
Erfinder: Giral, Louis, Prof.
Les 2 Ruisseaux 1526 Avenue du Père Soulas
F-34100 Montpellier(FR)

(54) **Blockcopolymere, die Polysilan und organische Polymer-Blöcke enthalten.**

(57) Die Erfindung betrifft Blockpolymere aus Polysilan und organischen Polymerblöcken sowie elektrisch leitfähigen Systemen aus diesen Blockpolymerisation die n-oder p-dotiert sind.

EP 0 266 693 A2

# Blockcopolymere, die Polysilan-und organische Polymer-Blöcke enthalten

Die Erfindung betrifft neue Blockcopolymere, die Polysilan-und organische Polymerblöcke enthalten und elektrisch leitfähige Systeme daraus.

Elektrisch leitfähige Systeme auf Basis organischer Polymere sind bekannt. So kann man z.B. Polyacetylene, Polypyrrol oder Polyphenylene chemisch oder elektrochemisch dotieren, so daß leitfähige Systeme entstehen. Diese leitfähigen System enthalten konjugierte Doppelbindungen und wirken als Kationen worin die vom Dotierungsvorgang herrührenden Leitsalzanionen angelagert sind. Man erreicht leitfähige Systeme mit Leitfähigkeiten zwischen $10^{-1}$ und 10 S/cm. Solche leitfähigen Systeme und deren Verwendung als Elektroden in Sekundärelementen sind beispielsweise in den EP-A-36 118 oder EP-A-131 829 beschrieben.

Aufgabe der Erfindung ist es neuer Blockcopolymere aufzuzeigen, die sich für elektrisch leitfähige Systeme eignen. Die Aufgabenstellung der Erfindung wird gelöst durch Blockcopolymerisate aus Polysilan-und organischen Polymerblöcken der allgemeinen Formel

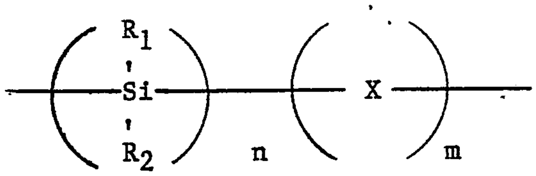

worin $R_1$ und $R_2$ Alkyl-, Aryl-, Alkaryl-oder heterocyclische Gruppe und $R_1$ und $R_2$ gleich oder ungleich und X ist ein organischer Polymerblock und n und m ganze Zahlen zwischen 3 und 10 000 sein können.

Ein weiterer Gegenstand der Erfindung sind die elektrisch leitfähigen Systeme auf der Basis der Blockcopolymeren der allgemeinen Formel die n- oder p-dotiert sind.

Polysilane und deren Herstellung sind bekannt. Diese Polymergruppe ist beispielsweise in Journal of Polymer Science Vol 22 , Seite 225-238 - [1984] beschrieben.

Nach diesem Prinzip werden die Polysilanblöcke hergestellt. Man erhält sie durch Umsatz von Dihalogensilanen, z.B. Dichlor-, Dibrom-oder Dijodsilanen mit Alkalimetallen, Erdalkalimetallen oder Verbindungen dieser Metalle. So kann man z.B. Polysilanblöcke durch Umsetzung von Dichlordialkylsilanen mit Kaliumbutylat herstellen. In den Polymerblöcken ist die Zahl n im allgemeinen zwischen 3 und 10 000 vorzugsweise zwischen 50 und 2 000. Die Polymerblöcke sind in organischen Lösungsmitteln wie Methylchlorid. Chlorbenzol oder Toluol löslich. Besonders vorteilhaft verwendet man zur Herstellung Polymerblöcke solche die Halogensilane mit Methyl-, anderen Alkyl-, Cycloalkyl-oder Arylgruppen, wobei $R^1$ und $R^2$ der obengenannten Formel gleich ist, auch die Verwendung von Cyclopentamethylendichlorsilan ist möglich.

Die organischen Polymerblöcke können nach verschiedenen Prinzipien erhalten werden. Vorteilhaft stellt man die organischen Polymerblöcke durch anionische Polymerisation von Dienen, wie Butadien, Isopren oder von anderen mit anionischen Katalysatoren polymerisierbaren Monomeren, wie Styrol oder alpha-Methylstyrol her. Hierzu läßt man zweckmäßig Lithium oder Lithiumalkylverbindung bzw. die Lithiumverbindungen mit den genannten Monomeren reagieren, wobei sich Polymerblöcke aufbauen, worin m zwischen 3 und 10 000, vorzugsweise zwischen 50 und 2 000 liegt. Die Herstellung derartiger Polymerblöcke ist bekannt und hinlänglich in der Fachliteratur beschrieben. Es ist aber auch möglich, daß die organischen Polymerblöcke durch Polykondensation von Dihalogenverbindungen mit Alkali-oder Erdalkalimetallen aufgebaut werden, wobei sich Polymerketten bilden. Vorteilhaft können hierzu z.B. Lösungen von Diphenyldichlorsilan, Dicyclopentamethylendichlorsilan und Cyclohexylmethyldichlorsilan mit Natrium in dispergierter Form umgesetzt werden.

Weiterhin können die organischen Polymerblöcke nach einem anderen Prinzip gewonnen werden, z.B. durch Polymerisation von Alkinen, wie Acetylen unter der Einwirkung von Katalysatoren die Acetylen zu polymerisieren vermögen. Solche Reaktionen laufen z.B. so ab, daß Mischungen von Dicyclohexyldichlorsilan mit Diphenyldichlorsilan mit 4,4 Mol Natrium in Toluol umgesetzt werden und danach die Reaktionslösung mit 0,1 Mol Triethylaluminium und 0,025 Mol Titantetrabutylat versetzt wird und danach bei Raumtemperatur 10 Mol Acetylen eingebracht werden.

Die Polymerblöcke werden nach folgenden Verfahren kombiniert bzw. gekoppelt. Ein Prinzip ist die Abbruch-bzw. Kopplungsreaktion der anionischen Polymerisate mit Dichlor-bzw. Dihalogendiaryl-oder Dihalogendialkylsilanen. Hierbei entstehen Verbindungen in denen die Siliziumverbindungsstellen zwischen den Polymerblöcken liegen. Eine wesentliche Verfahrensvariante ist die Verwendung von Trihalogenalkyl-bzw. Trihalogenarylsilanen. Hierbei werden verzweigte Siliziumbrücken enthaltende Sternpolymerisate aufgebaut.

Eine andere Verfahrensvariante besteht darin, anionische Polymerisate herzustellen und die Reaktionslösung mit Natrium, Alkaliamiden oder Alkalihydriden zu versetzten und dann zu diesen Suspensionen Dihalogenaryl-bzw. Dihalogenalkylsilane zuzufügen, wobei der Anteil der Halogenverbindung zu den Alkaliderivaten jeweils 1 : 1 ist.

Man erhält nach den obengennanten Prinzipien Blockcopolymere, die lediglich im Molekül einen Polysilan und einem organischen Polymerblock enthalten. Es können aber auch alternierende Polymere hergestellt werden, die mehrere Polysilane und mehrere organische Polymerblöcke im Molekül enthalten.

Die neuen Blockcopolymere dienen als Ausgangsstoff zur Herstellung elektrisch leitfähiger Systemen. Man erhält die elektrisch leitfähigen Systeme, indem man die Blockcopolymere mit Leitsalzanionen dotiert. Das Dotieren kann z.B. nach chemischen Verfahren erfolgen, wie sie in "Makromol. Synthesis Vol. I, p. 573" beschrieben sind. So können z.B. durch Verfahren der chemischen Dotierung die Blockcopolymer vorteilhaft mit Jod dotiert werden, dies kann z.B. in Lösung erfolgen, indem man Lösungen von Jod in Tetrachlorkohlenstoff mit den Blockcopolymeren in Berührung bringt. Jod kann auch dampfförmig mit dem Blockcopolymeren in Kontakt gebracht werden. Weitere Dotierungsmittel sind z.B. Oxidationsmittel, wie $FeCl_3$, $Fe(ClO_4)_3$, $IrCl_6$, $MoCl_5$, $WCl_6$ und ähnliche.

Besonders zweckmäßig ist das elektrochemische Dotieren durch anodische Oxidation. Diese ist beispielsweise in den bereits oben erwähnten EP-A-36 118 wie EP-A-131 829 beschrieben. Die Blockcopolymere weden als Anode eingebracht. Als Kathode dient zweckmäßig ein Edelstahlblech. Man kann bei einer Stromdichte von 0,05 bis 100 $mA/cm^2$ arbeiten. Die elektrolytische Zelle wird mit einem Elektrolytlösungsmittel und mit einem Leitsalz beschickt. Als Elektrolytlösungsmittel kommen z.B. nicht wäßrige Lösungsmittel wie Aceton, Acetonnitril, Dimethylformamid, Dimethylsulfoxid, Methylenchlorid oder Propylencarbonat in Frage. Es können aber auch Wasser oder Gemische von Wasser mit solchen Lösungsmitteln verwendet werden, die mit Wasser mischbar sind. Es können aber auch Emulsionen der Leitsalze im Wasser Verwendung finden. Die Konzentration der Leitsalze beträgt zweckmäßig 0,01 bis 0,1 Mol/l.

Als Anionen für Leitsalz haben sich $BF_4^-$, Ø-$SO_3^-$, $AsF_6^-$, $SbF_6^-$, $SbCl_6^-$, $ClO_4^-$, $HSO_4^-$ und $SO_4^{2}$ als günstig erwiesen. Eine weitere Gruppe von Leitsalz-Anionen, die bei dem erfindungsgemäßen Verfahren mit besonderem Vorteil eingesetzt werden, leiten sich von Aromaten mit sauren Gruppen ab. Hierzu gehören das $C_6H_5COO^-$-Anion sowie insbesondere die Anionen von gegebenenfalls mit Alkylgruppen substituierten aromatischen Sulfonsäuren. Wegen der damit erzielbaren guten Ergebnisse sind Leitsalze mit dem Benzolsulfonsäure-Anion $C_6H_5SO_3$ oder von aromatischen Di- oder Oligosulfonsäuren ganz besonders bevorzugt.

Als Kationen enthaltende Leitsalze z.B. Alkali oder Erdalkalikationen wie Lithium, Natrium oder Kalium. Es können aber auch Ammonium-Kationen und Leitsalz enthalten sein. Mitunter können die freie Säuren Verwendung finden, die die genannten Leitsalzanionen enthalten.

Das Dotieren der Blockcopolymeren mit den Leitsalzanionen, nimmt einen Zeitraum von etwa 1 bis 100 Minuten ein. Man erhält nach dieser Arbeitsweise elektrisch leitfähige Systeme, worin das erfindungsgemäße Blockcopolymere als polymeres Kation und die Leitsalze als Anionen eingebaut sind. Mann nennt diese P-Dotierung.

Es ist aber auch möglich, die Blockcopolymere mit Alkalimetallen wie Na, K oder Li zu dotieren. Hierzu werden z.B. die Blockcopolymeren mit K-Ketylen, alpha-Methylstyrolnatrium oder Na-Naphthalid umgesetzt.

Die Blockcopolymeren wirken dann als Anionen, worin die Alkalimetalle als Kationen eingelagert sind. Man spricht in diesem Fall von n-Dotierung.

Diese elektrisch leitfähigen Systeme auf Basis der Blockcopolymeren sind besonders stabil. Sie können daher z.B. als Elektroden, Sensoren oder als Leiter oder Abschirmschichten Verwendung finden.

Beispiel 1

In 150 Gew.-Teilen Toluol werden 5 Gew.-Teile Natrium(in Toluol dispergiert) und auf 115°C erhitzt. Es werden 12,5 Gew.-Teile Diphenyldichlorsilane und 10 Gew.-Teile Cyclohexyl-methyldichlorsilan zugefügt. Es wird 2 Stunden unter Rückflußtemperatur erhitzt. Danach werden weitere 5 Teile der Natriumdispersion zugefügt und 10 Gew.-Teile 1,4 Dichlorphenylen zugegeben und erneut 2 Stunden auf Rückfluß-Temperatur erhitzt. Danach wird die Reaktionslösung in 200 Gew.-Teile Ethanol eingegossen und dann 200 Gew.-Teile Wasser zugefügt. Die Toluolphase wird abgesaugt erneut mit 200 Gew.-Teilen Wasser gewaschen. Danach wird die Toluolphase eingeengt und durch Extraktion mit Trichlormethan werden nicht umgesetzte Mengen an Silanderivativen abgetrennt. Der Rückstand wird getrocknet, man erhält 18 Teile eines Copolymeren, das bei einer Temperatur zwischen 120 und 130° erweicht. Das so erhaltenen Polymer wird 30 Min. in eine gesättigte Jodlösung in Ethyenchlorid getaucht, und dann 30 Min. bei Raumtemperatur unter Stickstoff bei 20 Torr getrocknet. Die Leitfähigkeit beträgt $0,5 \cdot 10^{-1}$ S/cm.

Beispiel 2

Es wird wie in Beispiel 1 gearbeitet, jedoch nach der Kondensation keine weiteren Mengen an Natriumdispersion zugesetzt. Man fügt eine Lösung zu aus Toluol, die 10 Gew.-% eines Butadienblockpolymerisates, das mit Lithiumbutyl erhalten worden ist, enthält. In dem Blockpolymerisat ist die Zahl m etwa bei 1000.

Das Polymere wird mit Methanol gefällt und bei 30°C und 0,1 Torr 10 h getrocknet. Die Dotierung wird mit $NOSbF_6$ in Nitromethan durchgeführt. Dannach wird das Polymere bei Raumtemperatur unter Stickstoff getrocknet. Die Leitfähigkeit beträgt $10^{-3}$ S/cm.

In gleicher Weise kann gearbeitet werden, wenn man der Reaktionslösung der ersten Stufe eine Lösung eines Polymerisates von Styrol, das mit Lithiumbutyl erhaltenen worden ist, zusetzt. In diesem Polymerisat beträgt m = 250. Das Aufarbeiten und Dotieren erfogIt wie oben beschrieben, die Leitfähigkeit beträgt $10^{-3}$ S/cm.

Beispiel 3

Es wird wie in Beispiel 1 angegeben, das Di-Phenylindichlorsilan und das Cyclopentamethylendichlorsilan werden mit Hilfe von Natrium kondensiert. In die Reaktionslösung werden 1 Gew.-Teil Aluminiumtriethyl und 1 Gew.-Teil Butyllithium und 2 Gew.-Teile Titantetrabutylat zugesetzt. Die Lösung wird auf 20°C abgekühlt und danach werden 10 Gew.-Teile Acetylen eingeleitet. Es entsteht ein Polymeres, worin die Zahl n = 100 ist.

Die Aufarbeitung erfolgt durch Ausfällen in Methanol und Auswachsen mit 0,1 %iger HCl/Methanol.

Man erhält ein Polymeres dessen Leitfähigkeit 100 S/cm beträgt und zwar nach der Dotierung mit Jod, entsprechend Beispiel 1.

**Ansprüche**

1. Blockcopolymere aus Polysilan-und organischen Polymer-Blöcken der allgeimen Formel

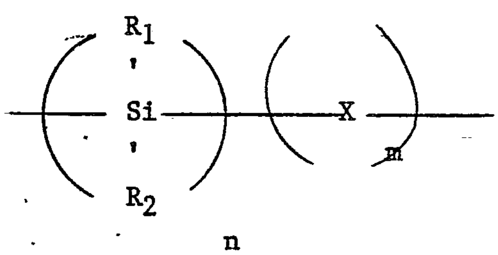

worin $R_1$ und $R_2$ Alkyl-, Aryl-, Alkanyl oder heterocyclishe Gruppen und $R_1$ und $R_2$ gleich oder ungleich und X ein organischer Polymerblock und n und m ganze Zahlen zwischen 3 und 10 000 sein können.

2. Blockcopolymere nach Anspruch 1, dadurch gekennzeichnet, daß sie n-oder p-dotiert sind.